# EUROPEAN PATENT SPECIFICATION

(11) **EP 1 541 943 B1**
(45) Date of publication and mention of the grant of the patent: **03.06.2009**
(21) Application number: 04028755.9
(22) Date of filing: 03.12.2004
(51) Int. Cl.: F25B 43/00

(54) **Gas liquid separator**
Gasflüssigkeitsabscheider
Séparateur gaz-liquide

(30) Priority: 09.12.2003 JP 2003409863
(43) Date of publication of application: 15.06.2005
(60) Divisional application: 06008852.3
(73) Proprietor: Fujikoki Corporation, Tokyo (JP)
(72) Inventor: Watanabe, Ryouji, Setagaya-ku Tokyo (JP); Furuta, Takuji, Setagaya-ku Tokyo (JP)
(74) Representative: Steinmeister, Helmut

(56) References cited:
- EP-A- 1 363 084
- GB-A- 176 956
- GB-A- 300 841
- GB-A- 1 537 413
- US-A- 1 523 916
- US-A- 2 214 658
- US-A- 3 881 900
- US-A- 4 194 371
- US-A- 6 015 453
- US-A1- 2001 018 897
- US-A1- 2003 154 860
- US-B1- 6 640 559
- PATENT ABSTRACTS OF JAPAN vol. 004, no. 106 (C-020), 30 July 1980 (1980-07-30) & JP 55 067319 A (TOYODA AUTOM LOOM WORKS LTD), 21 May 1980 (1980-05-21)
- PATENT ABSTRACTS OF JAPAN vol. 2003, no. 12, 5 December 2003 (2003-12-05) & JP 2003 269824 A (DENSO CORP), 25 September 2003 (2003-09-25)
- PATENT ABSTRACTS OF JAPAN vol. 018, no. 183 (M-1584), 29 March 1994 (1994-03-29) & JP 05 340650 A (DAIKIN IND LTD), 21 December 1993 (1993-12-21)
- PATENT ABSTRACTS OF JAPAN vol. 1999, no. 14, 22 December 1999 (1999-12-22) & JP 11 248296 A (MITSUBISHI ELECTRIC CORP), 14 September 1999 (1999-09-14)
- PATENT ABSTRACTS OF JAPAN vol. 012, no. 117 (C-487), 13 April 1988 (1988-04-13) & JP 62 241568 A (SHIONOGI & CO LTD), 22 October 1987 (1987-10-22)
- PATENT ABSTRACTS OF JAPAN vol. 013, no. 372 (C-627), 17 August 1989 (1989-08-17) & JP 01 127013 A (HITACHI LTD), 19 May 1989 (1989-05-19)
- PATENT ABSTRACTS OF JAPAN vol. 2002, no. 02, 2 April 2002 (2002-04-02) & JP 2001 289539 A (DENSO CORP), 19 October 2001 (2001-10-19)

## Description

### BACKGROUND OF THE INVENTION

### Field of the invention

The present invention relates to a gas liquid separator equipped in a refrigeration cycle.

### Description of the related art

Document JP 05 340650 A, also published as Patent Abstracts of Japan, volume 018, No. 183 (M-1584). 29 March 1994, discloses a centrifugal separation type oil separator comprising the features of the preamble of claim 1.

Document US-6,640,559 B1 discloses a vertical oil separator for a chiller system. The device includes a housing, an oil and gas inlet, a gas outlet, an oil outlet, a baffle, and a coalescing assembly to separate the oil from the oil and gas mixture. The corresponding separating method includes tangentially introducing the oil and gas mixture into a housing, separating the oil from the mixture by centrifugal force, separating the oil from the mixture by changing a flow direction of the mixture in the housing, discharging the gas from the housing, and discharging the oil separated from the oil and gas mixture from the housing.

Document U.S.-2,214,658. discloses a steam separator for separating the heavier particles of liquid and solid materials from vapors and gases by centrifugal and vortex actions. This separator comprises an outer casing and an inner exit pipe projecting into this casing to form an annular chamber, and inlet nozzle at one end of said chamber for directing fluid flow tangentially and toward the opposite end into said chamber to form a centrifugal vortex, a partition in spaced apart relation to said end of the exit pipe and containing a plurality of extraction slots, an extraction compartment on the opposite side of said partition to receive the spinning centrifuged matter of higher specific gravity ejected through said slots, a conduit for draining said extraction compartment, and vane means in said compartment to reduce the amount of spin of said ejected matter and to facilitate its passage into said conduit.

Regarding gas liquid separators equipped in a refrigeration cycle, a type of gas liquid separator capable of being attached directly to the side wall of a condenser for the refrigerant is proposed.

In the field of air conditioners equipped in a vehicle, the space that the air conditioner occupies in an engine room is required to be as small as possible, and for this purpose, there is a demand to reduce the size of the condenser and also reduce the diameter of the gas liquid separator.

Japanese Patent Application Laid-Open Publication No. 2003-202168 (Patent document 1) discloses a gas liquid separator that provides rotational flow to a gas-liquid mixed refrigerant flowing into the gas liquid separator, and to facilitate separation of the refrigerant into a gas phase refrigerant and a liquid phase refrigerant using centrifugal force.

When a small-diameter cylindrical gas liquid separator is attached vertically on the side wall of a condenser and a mixed refrigerant of gas and liquid is led into the gas liquid separator from the upper portion of the body which is flown in the body in spiral motion, since the body is of small diameter, the spiral flow speed increases, and the rotational flow of fluid collides against the liquid refrigerant accumulated on the bottom of the gas liquid separator, disturbing the accumulated liquid.

This disturbance of the liquid refrigerant is one of the causes that deteriorate the gas-liquid separation performance of the separator.

### SUMMARY OF THE INVENTION

Therefore, the present invention aims at providing a gas liquid separator capable of solving the prior art problems mentioned above.

The gas liquid separator according to the present invention is characterized by the features of claim 1.

According to the above arrangement, the gas liquid separator of the present invention can improve the gas-liquid separation performance while preventing the separated gaseous refrigerant from disturbing the liquid in the reservoir.

### BRIEF DESCRIPTION OF THE DRAWINGS

FIG. 1 is an explanatory view of a gas liquid separator according to the present invention;
FIG. 2 is an explanatory view of embodiment 1 of a rectifying member according to the present invention;
FIG. 3 is an explanatoryview of embodiment 2 of the rectifying member according to the present invention;
FIG. 4 is an explanatoryview of embodiment 3 of the rectifying member according to the present invention;
FIG. 5 is an explanatory view of embodiment 4 of the rectifying member according to the present invention;
FIG. 6 is an explanatory view of embodiment 5 of the rectifying member according to the present invention;
FIG. 7 is an explanatory view of embodiment 6 of the rectifying member according to the present invention;
FIG. 8 is an explanatory view illustrating another embodiment of the gas liquid separator according to the present invention;
FIG. 9 is an explanatory view illustrating yet another embodiment of the gas liquid separator according to the present invention; and
FIG. 10 is an explanatory view of the gas liquid separating member of the gas liquid separator shown in FIG. 9.

### DETAILED DESCRIPTION OF THE PREFERRED EMBODIMENTS

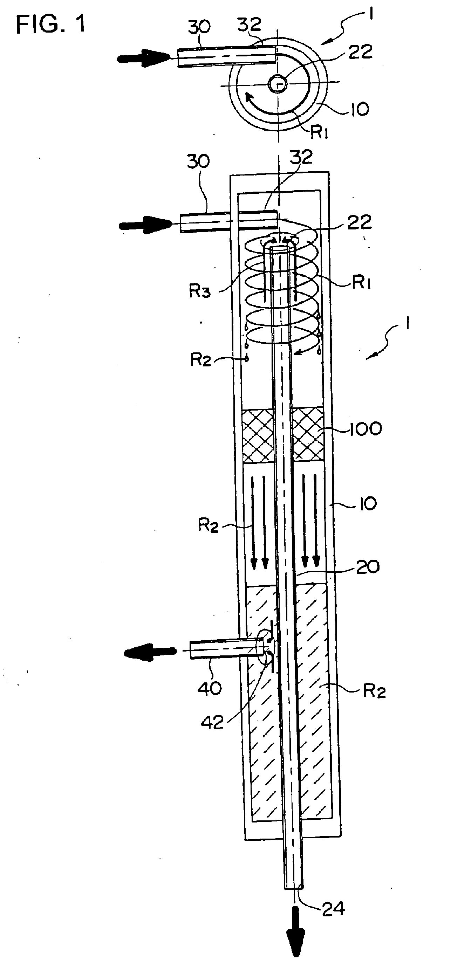

FIG. 1 is an explanatory view showing the structure of a gas liquid separator according to the present invention.

A gas liquid separator, the whole of which being denoted by reference number 1, comprises a small diameter cylindrical body 10, and inside the body 10 at the center area thereof is disposed an outlet pipe 20 for the gas phase refrigerant. The outlet pipe 20 of the gas phase refrigerant has an inlet port 22 for the gas phase refrigerant opening at the upper area of the body 10, and an outlet port 24 protruded from the bottom portion of the body 10.

At the upper area of the body 10 is attached an inlet pipe 30 for a two-phase refrigerant in which gas and liquid are mixed. An exit portion 32 of the inlet pipe 30 of the two-phase refrigerant is disposed so as to open in the direction tangential to the cylindrical body 10.

A two-phase refrigerant R₁ flowing in through the exit portion 32 of the inlet pipe 30 toward the direction tangential to the body 10 forms a rotational flow, and by the centrifugal force of the flow, the flow of refrigerant is separated into a liquid phase refrigerant R₂ having a larger specific gravity and a gas phase refrigerant R₃ having a smaller specific gravity.

The separated gas phase refrigerant R₃ flows into the inlet port 22 of the gas phase refrigerant outlet pipe 20, and is sent toward a compressor.

The separated liquid phase refrigerant R₂ passes through a rectifying member 100 according to the present invention described later. The liquid phase refrigerant R₂ being rectified through the rectifying member 100 is accumulated at the lower portion of the body 10.

The accumulated liquid phase refrigerant R₂ flows out through an entrance portion 42 of a liquid phase refrigerant outlet pipe 40, and is sent toward an expansion valve.

Now, we will describe various preferred embodiments of the rectifying member.

### [Embodiment 1]

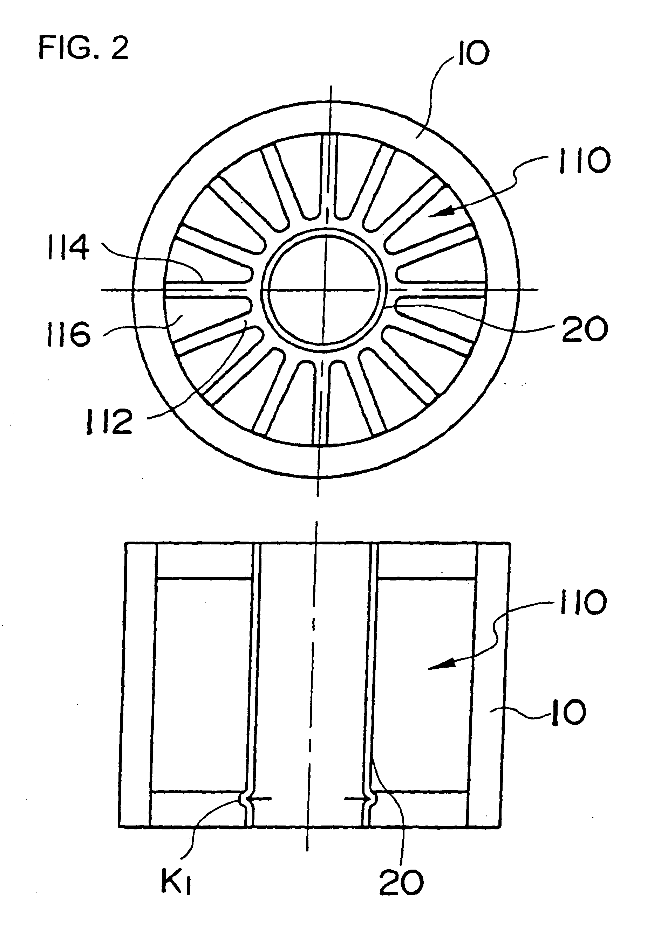

FIG. 2 illustrates a first embodiment of the rectifying member according to the present invention.

A rectifying member 110 is inserted between the gas phase refrigerant outlet pipe 20 and the body 10, and comprises a cylinder portion 112 that fits to the outer circumference portion of the pipe 20 and a plurality of blade portions 114 that extend radially from the cylinder portion 112.

The rectifying member 110 is formed for example of plastic material. An annular protruded portion K₁ is formed to the pipe 20 for example via a burring process, for supporting the rectifying member 110.

The liquid phase refrigerant is rectified when passing through a flow path 116 defined by the blade portion 114. The length of the rectifying member 110 in the axial direction can be determined appropriately according to the specifications of the gas liquid separator.

### [Embodiment 2]

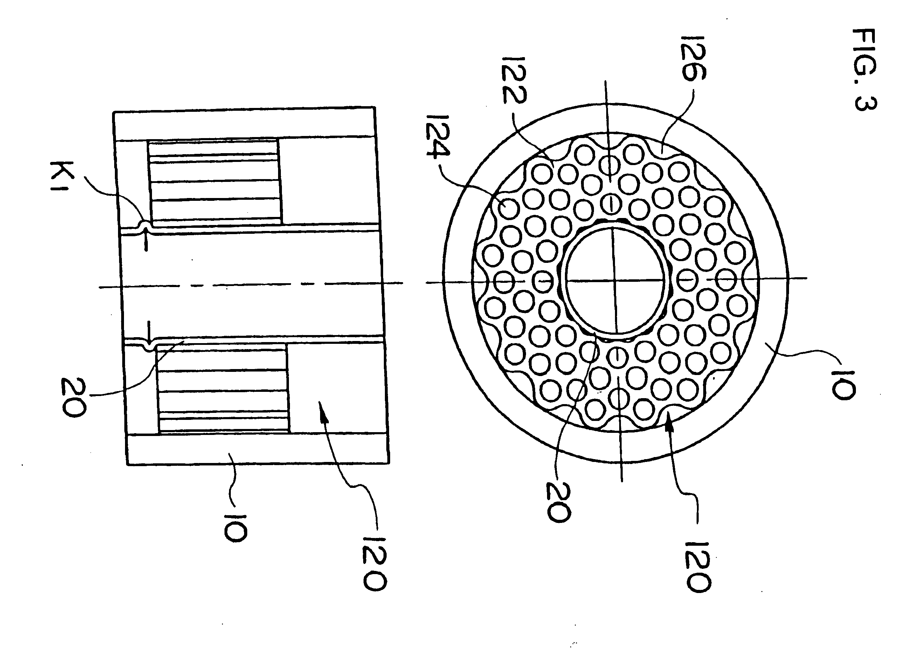

FIG. 3 shows a second embodiment of a rectifying member according to the present invention.

A rectifying member 120 is inserted between the gas phase refrigerant outlet pipe 20 and the body 10.

The rectifying member 120 is formed for example of plastic material, and a body portion 122 thereof has a number of cylindrical bores 124 formed thereto. Wavy opening portions 126 are provided to the outer circumference portion of the rectifying member 120.

An annular protruded portion K₁ is formed to the pipe 20 for example via a burring process, for supporting the rectifying member 120.

The liquid phase refrigerant is rectified when passing through the cylindrical bores 124 and the wavy opening portions 126 of the rectifying member 120.

The length of the rectifying member 120 in the axial direction can be determined appropriately according to the specifications of the gas liquid separator.

### [Embodiment 3]

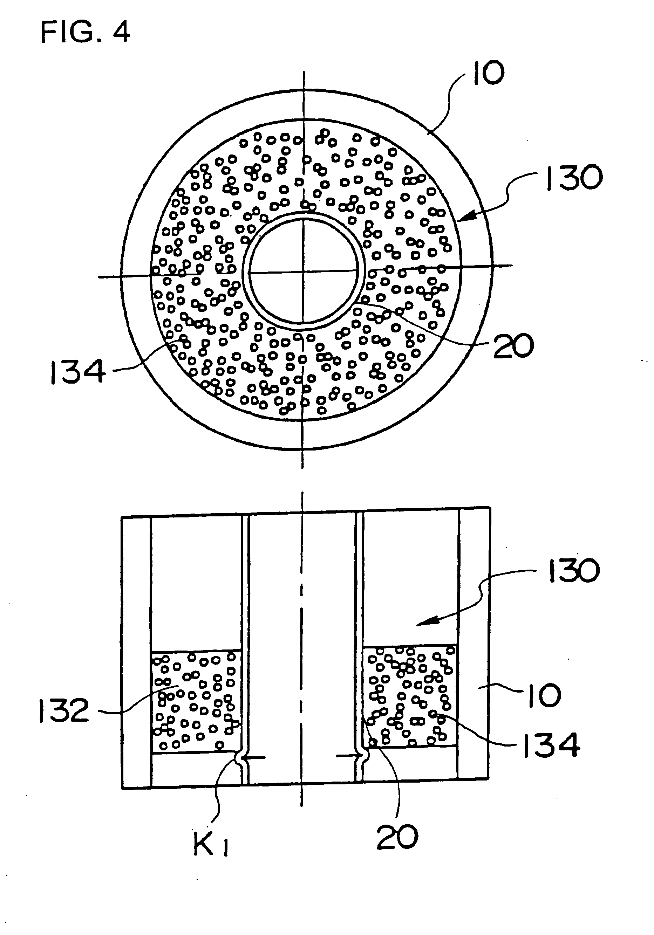

FIG. 4 shows a third embodiment of a rectifying member according to the present invention.

A rectifying member 130 is inserted between the gas phase refrigerant outlet pipe 20 and the body 10.

The rectifying member 130 is formed for example of porous foamed plastic material, and has a number of opening portions 134 formed within a body portion 132.

An annular protruded portion K₁ is formed to the pipe 20 for example via a burring process, for supporting the rectifying member 130.

The liquid phase refrigerant is rectified when passing through the opening portions 134 of the rectifying member 130.

The length of the rectifying member 130 in the axial direction can be determined appropriately according to the specifications of the gas liquid separator.

### [Embodiment 4]

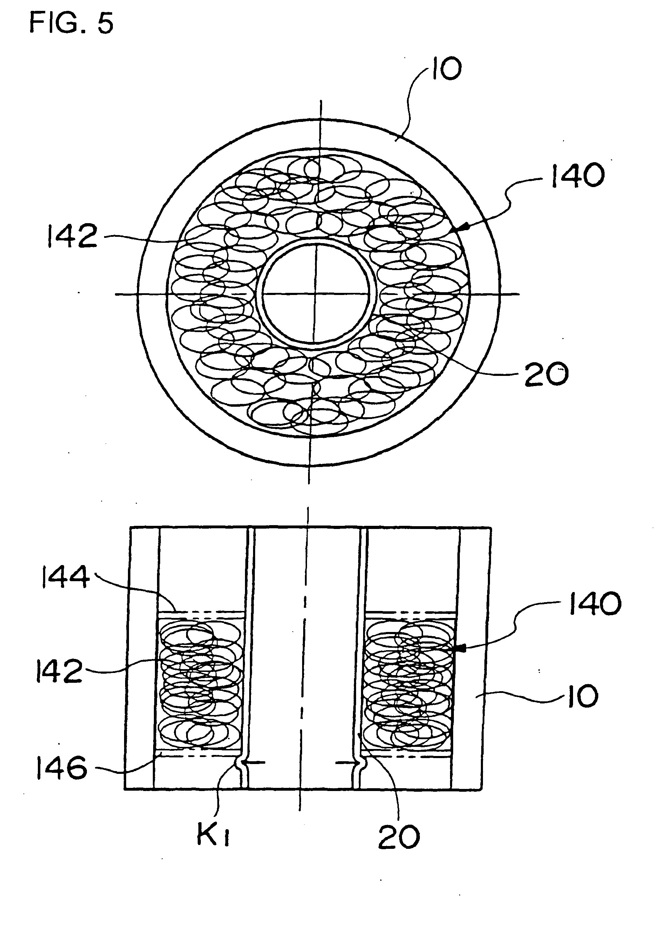

FIG. 5 shows a fourth embodiment of a rectifying member according to the present invention.

A rectifying member 140 is inserted between the gas phase refrigerant outlet pipe 20 and the body 10.

The rectifying member 140 is a sort of a filter formed by winding fine-gage wire 142, and is formed of metal or resin wire.

It is possible to dispose porous plates 144 and 146 above and below the wire 142 for retention.

An annular protruded portion K₁ is formed to the pipe 20 for example via a burring process, for supporting the rectifying member 140.

The liquid phase refrigerant is rectified when passing through the rectifying member 140.

The length of the rectifying member 140 in the axial direction can be determined appropriately according to the specifications of the gas liquid separator.

### [Embodiment 5]

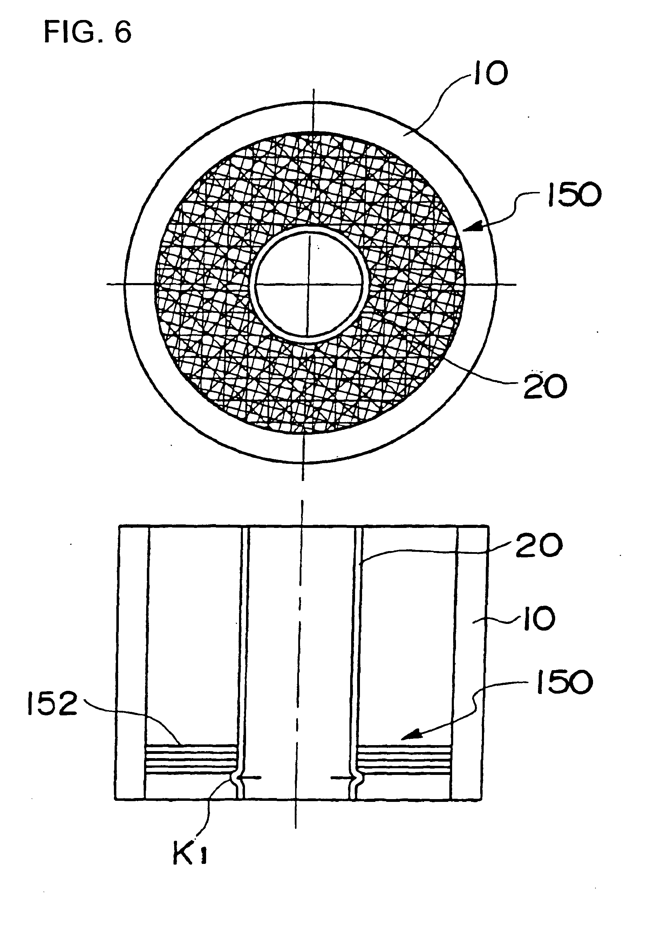

FIG. 6 shows a fifth embodiment of a rectifying member according to the present invention.

A rectifying member 150 is inserted between the gas phase refrigerant outlet pipe 20 and the body 10.

The rectifying member 150 is formed for example by layering a plurality of meshed members 152 formed of metal or plastic.

An annular protruded portion K₁ is formed to the pipe 20 for example via a burring process, for supporting the rectifying member 150.

The liquid phase refrigerant is rectified when passing through the rectifying member 150.

The length of the rectifyingmember 150 in the axial direction can be determined appropriately according to the specifications of the gas liquid separator.

### [Embodiment 6]

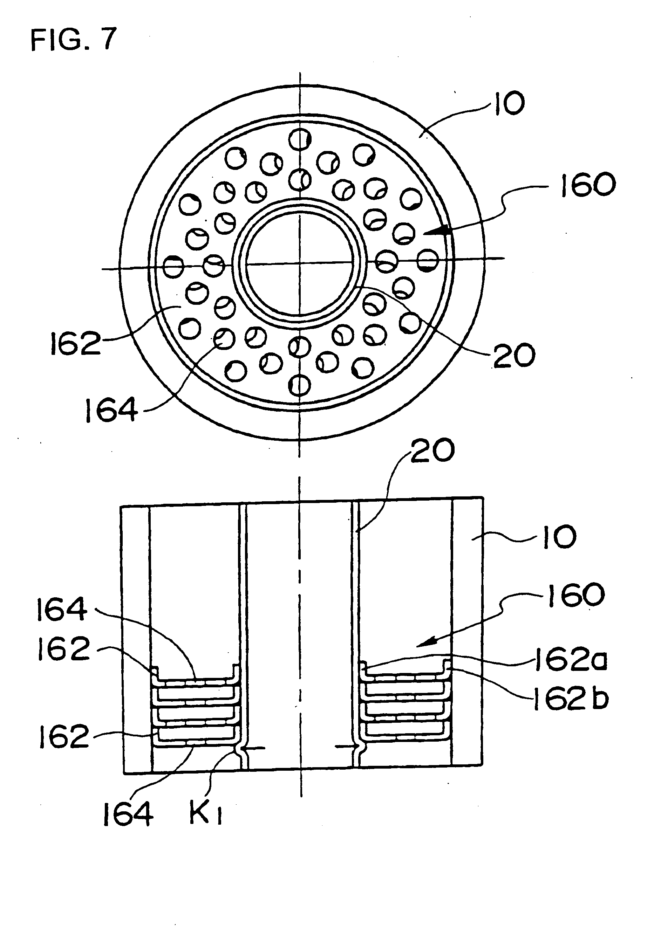

FIG. 7 shows a sixth embodiment of a rectifying member according to the present invention.

A rectifying member 160 is inserted between the gas phase refrigerant outlet pipe 20 and the body 10.

The rectifying member 160 is formed for example by layering a plurality of porous plates 162 formed of metal or plastic.

It is possible to form flanges 162a and 162b on the inner and outer circumferences of the porous plates 162 to regulate the interval between the plates.

An annular protruded portion K₁ is formed to the pipe 20 for example via a burring process, for supporting the rectifying member 160.

The liquid phase refrigerant is rectified when passing through the pores 164 of the rectifying member 160.

The length of the rectifying member 160 in the axial direction can be determined appropriately according to the specifications of the gas liquid separator.

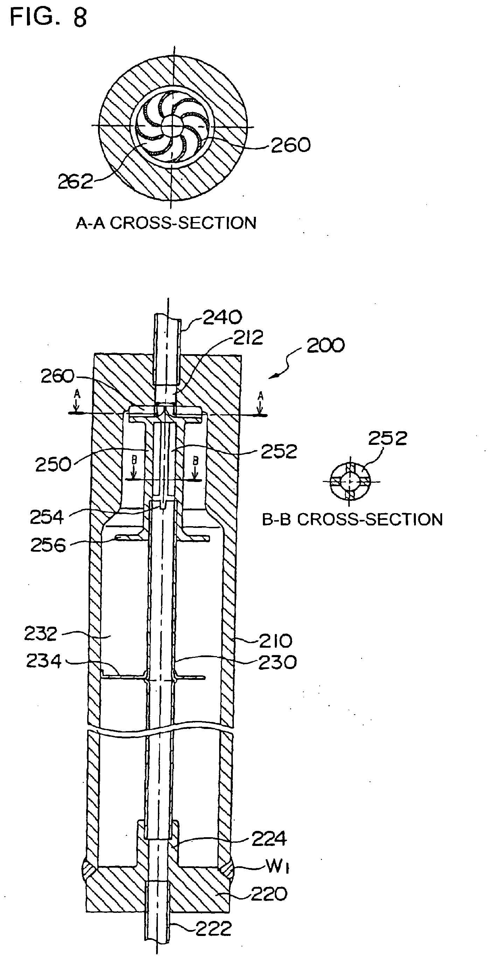

FIG. 8 is an explanatory view showing yet another embodiment of the gas liquid separator according to the present invention.

A gas liquid separator denoted as a whole by reference number 200 comprises a cylindrical body 210, and to an opening portion at the lower part of the body 210 is attached a header 220 via a weld portion W₁.

An outlet pipe 222 for gas phase refrigerant is attached to the header 220. A boss portion 224 is formed to the inner center portion of the header 220, and a hole formed to the center of the boss portion 224 receives an inserted lower end of a pipe member 230 and thus supports the pipe member 230.

A through hole 212 is formed to the upper center area of the body 210, to which is connected an inlet pipe 240 for a two-phase refrigerant. Directly under the inlet pipe 240 is disposed a gas liquid separating member 250.

The gas liquid separating member 250 can be, for example, a member formed by integrally molding a plastic material, which is fit to an upper end of the pipe member 250 using a projection 254.

A rotary blade portion 260 is provided to the upper area of the gas liquid separating member 250. The two-phase refrigerant flowing into the body 210 of the gas liquid separator from the inlet pipe 240 via the through hole 212 passes through the rotary blade portion 260.

The refrigerant constitutes a rotational flow when it passes through this rotary passage 262, and is sprayed into the interior of the body 210. By the centrifugal force created by the rotational flow, the refrigerant is separated into a liquid phase refrigerant having larger weight and a gas phase refrigerant having smaller weight.

Slits 252 are formed to the gas liquid separating member 250, and through these slits, the gas phase refrigerant enters the pipe member 230 and is sent out through the outlet pipe 222.

The liquid phase refrigerant is accumulated in a reservoir 232, which can be equipped with the above-mentioned rectifying member or the like. In order to do so, it is possible to provide a support plate 234 to the pipe member 230.

Similar to the aforementioned embodiments, the present gas liquid separator is provided with an outlet port for the liquid phase refrigerant.

A flange 256 formed to the gas liquid separating member 250 prevents the liquid phase refrigerant from returning toward the slits 252.

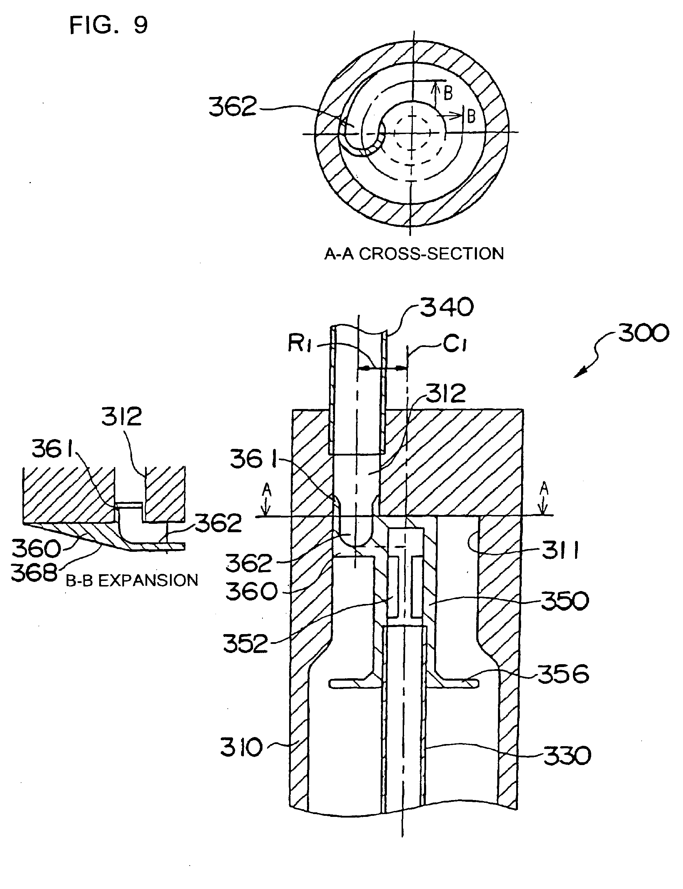

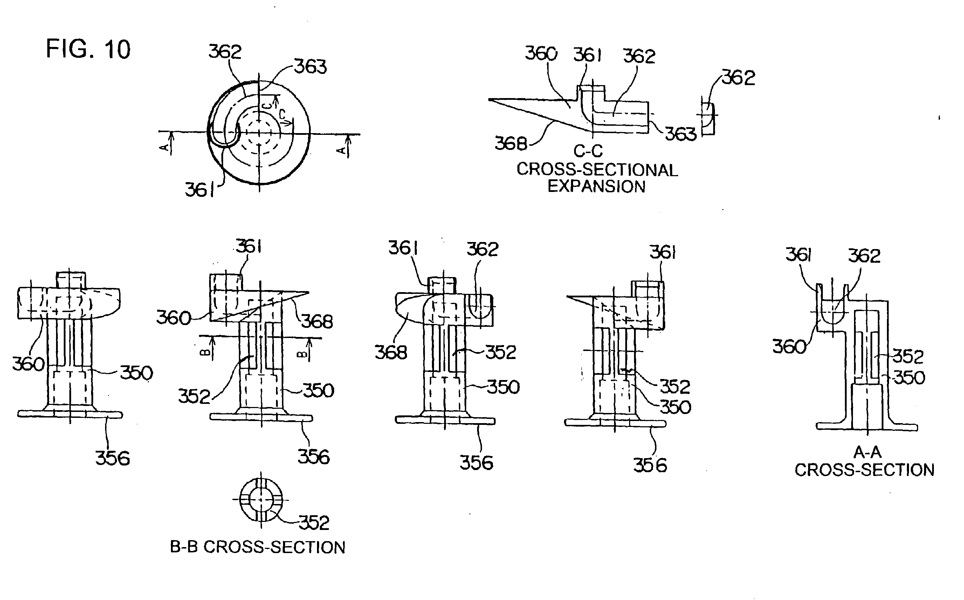

FIGS. 9 and 10 are explanatory views showing yet another embodiment of the gas liquid separator according to the present invention.

A gas liquid separator denoted as a whole by reference number 300 has a cylindrical body 310.

FIG. 9 illustrates the structure of only the upper area of the body 310, but the arrangements of other areas of the cylindrical body are the same as those explained with reference to FIG. 8, so they are omitted from the drawing.

A through hole 312 is provided to the upper portion of the body 310, which is displaced from an axis C₁ of the body 310 in the radial direction by distance R₁. An inlet pipe 340 of a two-phase refrigerant is connected to this through hole 312.

A gas liquid separating member 350 is attached to the upper end of a pipe member 330 disposed along the axis C₁ of the body 310.

The gas liquid separating member 350 has a refrigerant inlet portion 361 inserted to the through hole 312 of the body 310, and a rotary passage 362 disposed so as to guide the refrigerant along the inner circumference wall of the body 310.

As shown in FIG. 10, the rotary passage 362 is disposed only within a 90-degree area from the axial center of the refrigerant inlet portion, and terminates at an outlet end 363.

The two-phase refrigerant entering through an inlet pipe 340 and a through hole 312 into the body 310 in parallel with the axis of the body 310 is converted into a rotational flow when passing through the rotary passage 362, and flows along the inner circumference wall 311 of the body 310.

Opposite to the rotary passage 362 with respect to the axial center of the refrigerant inlet portion 361 of the gas liquid separating member 350 is formed a slanted lower surface 368 that extends for 180 degrees.

The rotational flow of refrigerant contacts this slanted lower surface and is biased downward, and thus converted into a swirling flow. In this downward swirling flow, the two-phase refrigerant is separated into a liquid phase refrigerant and a gas phase refrigerant by their differences in specific gravity.

The separated gas phase refrigerant is sent out to the exterior through slits 352 formed to the gas liquid separating member 350 and via the pipe member 330.

A flange 356 of the gas liquid separating member 350 prevents the liquid phase refrigerant from flowing toward the slits.

The separated liquid phase refrigerant is accumulated at the bottom portion of the body 310 and sent out to the exterior as needed.

### [Industrial Applicability]

As described, the present invention is capable of improving the performance of a gas liquid separator equipped in an air conditioner of a vehicle or the like.

## Claims

1. A gas liquid separator (1) for separating a two-phase refrigerant (R₁) of gas and liquid in a refrigeration cycle to a liquid phase refrigerant (R₂) and a gas phase refrigerant (R₃), the gas liquid separator (1) comprising:
a cylindrical body (10); disposed in a substantially vertical direction;
an outlet pipe (20) for the gas phase refrigerant (R₃) inserted to a center portion of the body (10);
an inlet port (30) for the two-phase refrigerant (R₁) attached to an upper end side of an axis direction of the body (10) in a direction tangential to the body (10); and
an outlet port (40) for the liquid phase refrigerant (R₂) attached to the other lower end side of an axis direction of the body (10);
wherein a rectifying member (100,110,120,130,140,150,160) for the liquid phase refrigerant (R₂) is attached between the inlet port (30) for the two-phase refrigerant (R₁) and the outlet port (40) for the liquid phase refrigerant (R₂) and being inserted between the gas phase refrigerant outlet pipe (20) and the body (10);
the rectifying member being provided for rectifying a liquid phase spiral refrigerant (R₂) having being subjected to centrifugal separation from the gas phase refrigerant in the upper end side of the body (10) into the straight flow led in the vertical direction to the lower end side of the body (10) where the liquid phase refrigerant is accumulated,
**characterized in that** the outlet pipe (20) for the gas phase refrigerant (R₃) is equipped with a protruded portion (K₁) which projects outward for supporting the rectifying member (110,120,130.140,150,160).

2. The gas liquid separator according to claim 1, wherein the rectifying member (110) comprises an inner cylinder portion (112) fit to the outlet pipe (20) for the gas phase refrigerant (R₃), and a plurality of blade portions (114) extending radially from the inner cylinder portion (112).

3. The gas liquid separator according to claim 1, wherein the rectifying member (120) comprises a plurality of cylindrical bores (124) and wavy opening portions (126).

4. The gas liquid separator according to claim 1, wherein the rectifying member (130) is formed of a foam member having a plurality of openings (134) .

5. The gas liquid separator according to claim 1, wherein the rectifying member (140) is formed of a member having wire wound up in the form of a filter.

6. The gas liquid separator according to claim 1, wherein the rectifying member (150) is formed by layering meshed members (152).

7. The gas liquid separator according to claim 1, wherein the rectifying member (160) is formed by layering porous plates (162).

## Patentansprüche

1. Gasflüssigkeitsabscheider (1) zur Trennung eines zweiphasigen Kältemittels (R₁) aus Gas und Flüssigkeit in einem Kältemittelkreislauf in ein Kältemittel (R₂) in einer flüssigen Phase und in ein Kältemittel (R₃) in einer Gasphase, welcher Gasflüssigkeitsabscheider (1) umfaßt:
einen zylindrischen Körper (10), der im wesentlichen senkrecht angeordnet ist;
ein Auslaßrohr (20) für das Kältemittel (R₃) in der Gasphase, das in einem zentralen Bereich des Körpers (10) eingesetzt ist;
eine Einlaßöffnung (30) für das zweiphasige Kältemittel (R₁), die an einer oberen Endseite in einer Axialrichtung des Körpers (10) in einer Richtung tangential zum Körper (10) angebracht ist; und
eine Auslaßöffnung (40) für das Kältemittel (R₂) in der flüssigen Phase, die an der anderen unteren Endseite in Axialrichtung des Körpers (10) angebracht ist;
wobei ein Gleichrichtungselement (100,110,120,130,140,150,160) für das Kältemittel (R₂) in der flüssigen Phase zwischen der Einlaßöffnung (30) für das zweiphasige Kältemittel (R₁) und der Auslaßöffnung (40) für das Kältemittel (R₂) in der flüssigen Phase angebracht ist und zwischen das Auslaßrohr (20) für das Kältemittel in der Gasphase und den Körper (10) eingesetzt ist,
welches Gleichrichtungselement dazu vorgesehen ist, ein spiralförmig strömendes Kältemittel (R₂) in der flüssigen Phase, das einer zentrifugalen Trennung von dem Kältemittel in der Gasphase an der oberen Endseite des Körpers (10) unterzogen worden ist, in einen geraden Strom gleichzurichten, der in vertikaler Richtung zur unteren Endseite des Körpers (10) führt, an der das Kältemittel in der flüssigen Phase gesammelt wird,
**dadurch gekennzeichnet, dass** das Auslaßrohr (20) für das Kältemittel (R₃) in der Gasphase mit einem Vorsprungsbereich (K₁) ausgestattet ist, der nach außen zur Lagerung des Gleichrichtungselements (110,120,130,140,150,160) vorspringt.

2. Gasflüssigkeitsabscheider gemäß Anspruch 1, bei welchem das Gleichrichtungselement (110) einen inneren Zylinderbereich (112) umfaßt, der auf das Auslaßrohr (20) für das Kältemittel (R₃) in der Gasphase aufgepaßt ist, sowie eine Anzahl von Flügelbereichen (114), die sich radial von dem inneren Zylinderbereich (112) erstrecken.

3. Gasflüssigkeitsabscheider gemäß Anspruch 1, bei welchem das Gleichrichtungselement (120) eine Anzahl zylindrischer Bohrungen (124) und wellenförmiger Öffnungsbereiche (126) umfaßt.

4. Gasflüssigkeitsabscheider gemäß Anspruch 1, bei welchem das Gleichrichtungselement (130) aus einem Schaumelement mit einer Anzahl von Öffnungen (134) gebildet wird.

5. Gasflüssigkeitsabscheider gemäß Anspruch 1, bei welchem das Gleichrichtungselement (140) aus einem Element mit einem Draht gebildet wird, der in Form eines Filters aufgewickelt ist.

6. Gasflüssigkeitsabscheider gemäß Anspruch 1, bei welchem das Gleichrichtungselement (150) gebildet wird durch Schichtung mit Maschen versehener Elemente (152).

7. Gasflüssigkeitsabscheider gemäß Anspruch 1, bei welchem das Gleichrichtungselement (160) durch Schichtung poröser Platten (162) gebildet wird.

## Revendications

1. Séparateur gaz-liquide (1) pour séparer un réfrigérant à deux phases (R₁) de gaz et de liquide dans un cycle de réfrigération en un réfrigérant en phase liquide (R₂) et un réfrigérant en phase gazeuse (R₃), le séparateur gaz-liquide (1) comprenant :
un corps (10) cylindrique disposé dans une direction sensiblement verticale ;
un tuyau de sortie (20) pour le réfrigérant en phase gazeuse (R₃) inséré dans une partie centrale du corps (10) ;
un orifice d'entrée (30) pour le réfrigérant à deux phases (R₁) fixé à un côté d'extrémité supérieure d'une direction d'axe du corps (10) dans une direction tangentielle au corps (10) ; et
un orifice de sortie (40) pour le réfrigérant en phase liquide (R₂) fixé à l'autre côté d'extrémité inférieure d'une direction d'axe du corps (10) ;
dans lequel un élément de rectification (100, 110, 120, 130, 140, 150, 160) pour le réfrigérant en phase liquide (R₂) est fixé entre l'orifice d'entrée (30) pour le réfrigérant à deux phases (R₁) et l'orifice de sortie (40) pour le réfrigérant en phase liquide (R₂) et est inséré entre le tuyau de sortie (20) de réfrigérant en phase gazeuse et le corps (10),
l'élément de rectification étant prévu pour rectifier un réfrigérant en spirale en phase liquide (R₂) qui a été soumis à une séparation centrifuge du réfrigérant en phase gazeuse du côté d'extrémité supérieure du corps (10) en l'écoulement direct conduit dans la direction verticale vers le côté d'extrémité inférieure du corps (10) où le réfrigérant en phase liquide est accumulé,
**caractérisé en ce que** le tuyau de sortie (20) pour le réfrigérant en phase gazeuse (R₃) est pourvu d'une partie saillante (K₁) qui fait saillie à l'extérieur pour supporter l'élément de rectification (110, 120, 130, 140, 150, 160).

2. Séparateur gaz-liquide selon la revendication 1, dans lequel l'élément de rectification (110) comprend une partie interne (112) cylindrique assemblée au tuyau de sortie (20) pour le réfrigérant en phase gazeuse (R₃), et une pluralité de parties formant lames (114) s'étendant radialement à partir de la partie interne (112) cylindrique.

3. Séparateur gaz-liquide selon la revendication 1, dans lequel l'élément de rectification (120) comprend une pluralité d'alésages (124) cylindriques et de parties d'ouverture (126) ondulées.

4. Séparateur gaz-liquide selon la revendication 1, dans lequel l'élément de rectification (130) est constitué d'un élément en mousse comportant une pluralité d'ouvertures (134).

5. Séparateur gaz-liquide selon la revendication 1, dans lequel l'élément de rectification (140) est constitué d'un élément comportant un fil enroulé sous la forme d'un filtre.

6. Séparateur gaz-liquide selon la revendication 1, dans lequel l'élément de rectification (150) est formé par la disposition en couches d'éléments à mailles (152).

7. Séparateur gaz-liquide selon la revendication 1, dans lequel l'élément de rectification (160) est formé par la disposition en couches de plaques poreuses (162).
